# EUROPEAN PATENT APPLICATION

(11) **EP 4 530 379 A1**
(43) Date of publication of application: **02.04.2025**
(21) Application number: 24197843.6
(22) Date of filing: 02.09.2024
(51) Int. Cl.: C25D 3/56, C25D 5/50, C25D 7/00, C25D 15/00, F16D 65/12

(54) **CORROSION AND WEAR-RESISTANT BRAKE DISC AND RELATED METHODS**

(30) Priority: 26.09.2023 US 202318474516
(71) Applicant: Honeywell International Inc., Charlotte, NC 28202 (US)
(72) Inventor: PIASCIK, James, Charlotte, 28202 (US); JADIDIAN, Bahram, Charlotte, 28202 (US); MEHR, Mehrad, Charlotte, 28202 (US); WANG, David, Charlotte, 28202 (US)
(74) Representative: Lucas, Peter Lawrence

(57) **Abstract**

A corrosion and wear-resistant brake disc is disclosed. The brake disc comprises a brake body having at least one braking surface, and a corrosion and wear-resistant coating electrodeposited on the braking surface. The corrosion and wear-resistant coating comprises a precipitation-hardened cobalt-phosphorus (CoP) alloy and exhibits a Vickers hardness of from about 900 to about 1050 HV. A method of preparing the brake disc is also disclosed, and comprises electrodepositing a cobalt-phosphorus (CoP) alloy onto at least one braking surface of a disc body to a thickness of at least about 150 µm to give a coated disc body. The method also comprises heat treating the coated disc body to precipitation harden the CoP alloy and give the corrosion and wear-resistant coating on the braking surface.

## Description

### TECHNICAL FIELD

This disclosure relates generally to brake components and, more particularly to, corrosion and wear-resistant brake discs having precipitation-hardened protective coatings on braking surfaces and methods for preparing the same.

### BACKGROUND OF THE INVENTION

Disc braking systems are used in a wide range of vehicles, and generally include calipers provided to house and press/squeeze one or more pads (e.g. via a master cylinder) against a brake disc (or "rotor") fixed to a shaft (e.g. an axle). This interaction creates friction and is used to slow, stop, or prevent rotation of the shaft ("braking"). The brake disc typically comprises an annular ring structure ("braking band") that includes a braking surface against which the pads are pressed during braking, and a central fixing element ("bell" or "hub") adapted to hold and fix the disc to the rotating shaft of a vehicle. Typically, the braking band is provided with a pair of opposed braking surfaces configured to be engaged by an opposing pair of brake pads within a caliper fixed to a non-rotating component of the vehicle. The controlled interaction between the brake pads and the braking surfaces of the braking band provides the braking action via friction, thereby allowing the deceleration or stopping of the vehicle.

Generally, brake discs are made of grey cast iron or steel, which are selected for low cost and acceptable braking performance and wear. However, these materials are heavy, prone to wear leading to frequent service and/or replacement needs, and furthermore are prone to excessive surface oxidation and rusting. These issues impact both the appearance of the brake disc as well as the performance. Moreover, increasing environmental concerns regarding brake dust, i.e., iron particles resulting from the grinding of cast iron brake rotors by associated brake pads. Brake dust has been estimated to contribute to around 20% of fine particular matter pollution from current automotive vehicles, compared to about 7% contribution from exhaust fumes, and has been associated with a variety of aerosol-linked respiratory problems. As such, many environmental and legal initiatives have been initiated to reduce or eliminate brake dust-forming braking systems.

Alternative materials have been investigated with mixed success. Discs made of titanium, carbon, or carbon-ceramic materials offer much better performance, in terms of braking, lower weight, and reduced wear. However, these materials are only available at much higher costs and have not yet been widely adopted. Discs made of aluminum have been proposed as a less expensive alternative to grey cast iron discs or to steel discs in order to reduce the weight of the disc. Such aluminum discs are provided with protective coatings to reduce disc wear and protect the aluminum base from the temperatures generated during braking, which are typically well above the softening temperatures of aluminum (200-400 °C). Similar coated discs of cast iron have also been investigated in order to simply reduce the wear and surface oxidation of the widely-used disc materials.

Unfortunately, while offering varying degrees of wear resistance, the protective coatings available today as applied on aluminum, cast iron, or steel discs are typically subject to flaking that results in detachment from the disc itself, and ultimately premature wearing of the associated braking components. Various techniques have been explored to address this issue, with manufacturers and developers relying on well-known coating and deposition procedures including High Velocity Oxygen Fuel (HVOF), High Velocity Air Fuel (HVAF), and Kinetic Metallization (KM) techniques. The combination of the HVOF, HVAF and KM deposition techniques generally provide protective coatings with increased bond strength, which provides a higher anchoring capacity on grey cast iron or steel substrates. However, while these processes can significantly reduce the flaking of the protective coatings prepared, none have eliminated the issue, or addressed additional concerns regarding corrosion resistance, which is necessary in wet climates, especially in regions where salt is used to control road conditions such as ice over.

Moreover, in addition to the continued performance concerns, modern protective coatings and application techniques are costly and provide as-applied coatings in a hard and brittle state. This latter issue inhibits post-coating machining or surface finishing, leading to strict process controls being needed to ensure proper dimensional tolerances are maintained during manufacture. Post-coating machining steps that are needed, such as grinding to satisfy surface finish requirements, are likewise costly and time consuming, often requiring diamond cutting tools and specialized operations. Such post-coating machining can also result in damage to the brake disc, such as via chipping or cracking of the newly-deposited coating. This may not only adversely impact the structural integrity of the wear-resistant coating itself, but may also render the coating prone to the ingress of environmental contaminants that can lead to the issues of flaking, wear, etc. as noted above.

Furthering this issue, many brake discs are perforated or otherwise provided with slots or grooves (axially). Such features provide channels for brake abrasion materials and water to accumulate in and, as a result of the centrifugal forces generated during operation, to be discharged outward along the groove and away from the braking surface. Consequently, such features can improve the response behavior during wet weather, and also increase the heat discharge in the brake disc via increasing the surface area, providing airflow (e.g. via through-holes), etc. As will be appreciated from the issues noted above, however, these features are very limited in application with conventional protective coatings, which are not readily machined or processed after application, and are thus proscribed for use with contoured brake discs. As such, additional solutions for resilient and cost-effective brake discs are required to meet the increasing performance, manufacturing, and environmental safety demands on modern braking systems.

### SUMMARY OF THE INVENTION

A corrosion and wear-resistant brake disc is provided. The brake disc comprises a brake body having at least one braking surface, and a wear-resistant coating electrodeposited on the braking surface. The wear-resistant coating comprises a precipitation-hardened cobalt-phosphorus (CoP) alloy and exhibits a Vickers hardness of from about 900 to about 1050 HV. The wear-resistant coating is optionally formulated with various additives for increased and/or tailored performance. Moreover, the wear-resistant coating exhibits excellent resistance to both wear and corrosion, excellent bond strength to desirable substrate materials, and is applied via a method that allows for post-deposition machining in a pre-hardened state.

A method of preparing the brake disc is also provided. The method comprises electrodepositing a cobalt-phosphorus (CoP) alloy onto the braking surface of a disc body, typically to a thickness of at least about 150 µm, to give a coated disc body. The method also comprises heat treating the coated disc body to precipitation harden the CoP alloy and give the corrosion and wear-resistant coating on the braking surface. The coating exhibits a Vickers hardness of from about 900 to about 1050 HV. The method optionally includes machining the coated disc body before the heat treating, with the precipitation-hardened CoP alloy of the corrosion and wear-resistant layer exhibiting a Vickers harness of at least twice that of the as-deposited cobalt-phosphorus (CoP) alloy of the coated disc body (i.e., before the heat treating).

Various additional examples, aspects, and other useful features of embodiments of the present disclosure will also become apparent to one of ordinary skill in the relevant industry given the additional description provided below.

### BRIEF DESCRIPTION OF DRAWINGS

Color Drawings Available: The patent or application file associated with this disclosure at the United States Patent and Trademark Office contains at least one drawing executed in color. Copies of this patent or patent application publication with color drawing(s) will be provided by the Office upon request and payment of the necessary fee.

At least one example of the present invention will hereinafter be described in conjunction with the following figures, wherein like numerals denote like elements, and:
FIG. 1 shows an exemplary coated brake disc according to the present embodiments,
FIG. 2 is an isometric cutaway view of a braking band of a coated brake disc protected by a corrosion and wear-resistant coating according to the present embodiments;
FIG. 3 shows an image of the microstructure of the corrosion and wear-resistant coating on a sample substrate as prepared in the Examples at 500x (a) and 5000x (b);
FIG. 4 shows a series of images of the corrosion and wear-resistant coating after repeated heat cycles simulating extreme braking events during operation; and
FIG. 5 shows a series of images of the corrosion and wear-resistant coating after prolonged exposure to extreme corrosive environments.

### DETAILED DESCRIPTION OF THE INVENTION

The following detailed description is merely exemplary in nature and is not intended to limit the instant composition or method. Furthermore, there is no intention to be bound by any theory presented in the preceding background or the following detailed description.

A corrosion and wear-resistant brake disc and a method for preparing the same are provided herein. The brake disc comprises a brake body having at least one braking surface, and a corrosion and wear-resistant coating electrodeposited on the braking surface. The corrosion and wear-resistant coating comprises a precipitation-hardened cobalt-phosphorus (CoP) alloy and may optionally be formulated with various additives as described below. The corrosion and wear-resistant coating exhibits excellent resistance to both wear and corrosion and excellent bond strength to desirable substrate materials. The method allows for post-deposition machining of the coating and/or the brake body itself while the coating is in a pre-hardened state, providing increased functionality and utility to the improved coated brake discs. These and other features will be understood in view the description and examples herein.

In general, the present disclosure provides coating compositions, methods of preparing and/or applying the coating compositions onto a substrate (e.g. to form a coating thereon), methods of preparing multi-layer coated articles, and coated articles prepared by such application methods. For the sake of brevity, well known conventional techniques related to the compositions, methods, processes, devices, systems, and articles, as well as various portions and components thereof, may be introduced or otherwise set forth in the embodiments herein with varying levels of description. For example, conventional techniques related to formation of the coating compositions may not be described in detail herein, as the various steps in the manufacture of such compositions are well-known or otherwise previously described and provided for, and will thus be readily understood and envisaged by those of skill in the art in view of the embodiments and examples provided herein. Similarly, various tasks and process steps described herein may be incorporated into a more comprehensive procedure or process having additional steps or functionality not otherwise described, e.g. for being known and appreciated by those of skill in the art. Such conventional steps may only be mentioned briefly or may be omitted entirely without providing well-known process details. However, the scope of description is not intended to be limiting with respect the applicability of such routine steps, which may provide superior and/or unexpected results when combined with the unique features of the embodiments provide herein.

It will be appreciated that the coated brake disc and method of preparing the same are interrelated and, consequently, best understood in view of each other. Likewise, the common components, precursors, and final features of the product of the method and the article independently described will be understood to relate to one another unless explicitly stated otherwise. In this fashion, the brake disc may be provided as a stand-alone article or otherwise as a product-by-process, as will be understood in view of the Examples provided herein. Moreover, it will be appreciated that the method, which does not rely on conventional techniques of High Velocity Oxygen Fuel (HVOF), High Velocity Air Fuel (HVAF), an/or Kinetic Metallization (KM) for material deposition, provides the corrosion and wear-resistant coating with unique properties not achievable with such conventional processes. These distinguishing features are presented and described both qualitatively and quantitatively herein.

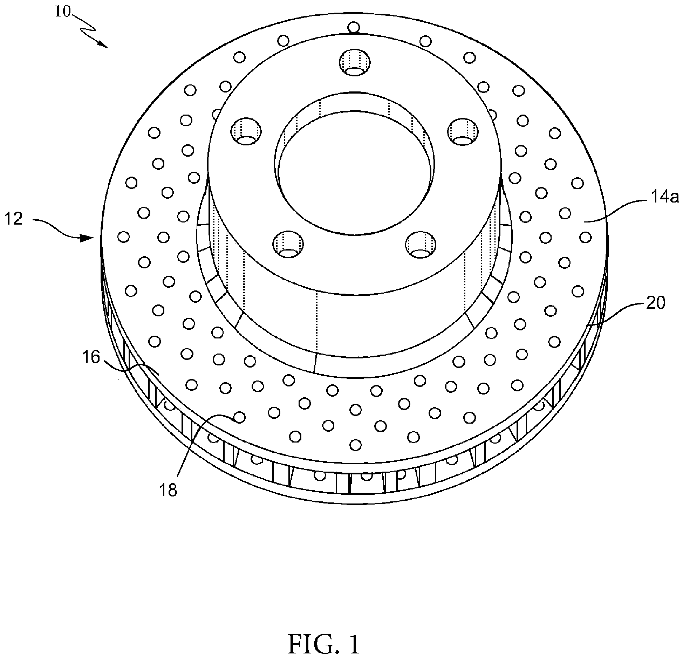

With reference to the Figures, an exemplary brake disc 10 is shown in FIG. 1. The brake disc 10 comprises a braking band 12 that presents two opposite braking surfaces (14a, 14b), each of which at least partially defines one of the two main faces of the brake disc 10. These braking surfaces 14a, 14b are provided with structural features exemplified by holes 18, and the brake disc 10 as a whole is shown to be internally ventilated. The brake disc 10 includes the corrosion and wear-resistant coating indicated at 16. For brevity the coating 16 may simply be referred to as the "wear-resistant coating" 16, without limiting the scope of the function or properties thereof.

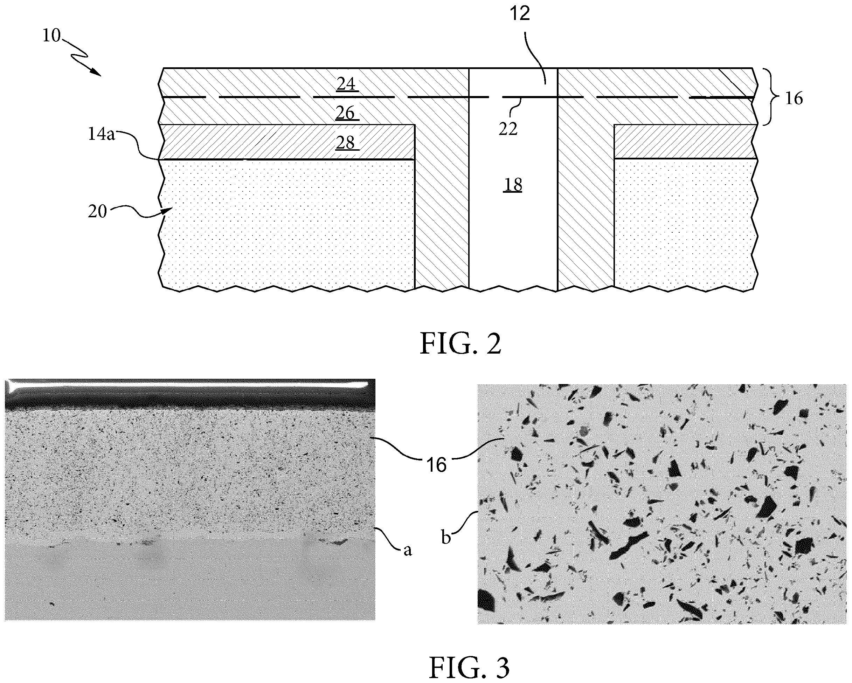

A cross-sectional schematic of a portion of the braking band 12 is shown in FIG. 2, centered on one of the holes 18. The braking band 12 includes an underlying substrate or body 20, which has the surface 14a over which the wear-resistant coating 16 is formed. The body 20 can have any number and type of structural features, such as the holes 18 and/or grooves, channels, slots, etc., which may be present prior to formation of wear-resistant coating 16 or which may be defined via machining operations carried-out during the coating process. Typically, the features exemplified by the holes 18 are present prior to the coating process, such that the wear-resistant coating 16 covers the interior surfaces of the body 20 as shown in FIG. 2, which provides for maximum environmental barrier protection to the underlying body 20.

The wear-resistant coating 16 may be prepared as a single layer or as multiple layers. For example, as indicated in FIG. 2 by dashed line 22, the wear-resistant coating 16 may be deposited as a first cobalt-phosphorus (CoP) alloy layer 24 and as second, subsequently-deposited CoP alloy layer 26. When so formed, CoP alloy layers 24, 26 may or may not have substantially equivalent thicknesses, morphologies, and/or formulations. For example, the first CoP alloy layer 24 may be electrodeposited over component surface 14a utilizing a first plating bath chemistry, the partially-coated body 20 then removed from the plating bath, machined, and returned to the same or a similar plating bath; and then coated via electrodeposition of the second CoP alloy layer 26 over the first CoP alloy layer 24. As discussed further herein, such an approach may be useful when precipitation-hardened wear-resistant coating 16 is deposited at relatively high thicknesses and may be prone to nodular growth. In such instances, nodule growth can occur near edges, corners, and similar topological features of the body 20 (e.g. such as the holes 18), as the electroplating process progresses. Localized irregulates or nodular protuberances can consequently develop, grow, and potentially scavenge the plating current, obstruct features having smaller dimensions, and cause similar issues. As a more specific example, in an embodiment in which the holes 18 exist prior to the coating formation process (as opposed to being formed after the coating formation process by drilling or other machining), localized growth can occur near the mouth of the holes 18 and may potentially pinch-off or obstruct the holes 18 if not removed. By temporarily halting the plating process, grinding or otherwise removing such regions of localized growth, and then resuming the plating process, this can be avoided. In other embodiments, the wear-resistant coating 16 can be deposited in three or more layers, with any number and type of machining operations interspersed with the layer deposition steps as provided for herein.

The brake disc 10 may be fabricated to contain one or more additional layers in addition to the wear-resistant coating 16. This possibility is illustrated in FIG. 2, which depicts a representative barrier layer 28 between the body 20 and the wear-resistant coating 16. Barrier layer 28 may be formulated to prevent or at least deter penetration of contaminants through the thickness of the wear-resistant coating 16, e.g. to reduce corrosion or other degradation of underlying body 20. However, one feature of the present embodiments is the ability to direct-coat the body 20 without the need for such a barrier layer 28. In typical embodiments, the brake disc 10 is free from intermediate layers (e.g. barrier layer 28) between the body 20 (e.g. surface 14 and the wear-resistant coating 16. The method and composition of the wear-resistant coating 16, described further herein, provides for excellent bonding to the body 20 as well as barrier performance in terms of wear-resistance and corrosion resistance, as demonstrated in the Examples.

Turning to the various components, it will be appreciated that the form of the brake disc 10 is not particularly limited, and may present in a form suitable for use in opposed piston-type disc braking systems or floating type disc braking systems, mechanical or hydraulic systems, etc., without limitation as to particular vehicle or configuration so long as suitable for the practice of the embodiments presented herein. The excellent properties of the wear-resistant coating 16 provide for broad utility, enabling use on heavy transport vehicles as well as light consumer vehicles without performance limitation. Likewise, the braking band 12 may be plain, dimpled, drilled, slotted, or any combination thereof.

The brake disc 10 may be unitary in construction, or may instead be a multi-component part comprising the braking band 12. In general, the braking band 12 is selected from readily available materials suitable for use in brake disc application, such as gray cast iron, aluminum alloys, titanium alloys, and various combinations thereof. Other materials such as steel may also be employed. The braking band 12 may be a single composition (e.g. gray cast iron), or may instead be a composite. In some embodiments, the braking band 12 is made entirely of gray cast iron. In some such embodiment, the entire body 20 consists essentially of gray cast iron.

As introduced above, the wear-resistant coating 16 comprises a precipitation-hardened cobalt-phosphorus (CoP) alloy. In general, the wear-resistant coating 16 is formed via electrodeposition of the CoP alloy onto the body in a pre-hardened state, subsequently optionally machined, and then heat treated to precipitation-harden the CoP alloy and give the wear-resistant coating 16.

Prior to the deposition step, the surface 14 of the body 20 is typically prepared for coating, such as via cleaning (e.g. washing, acid treatment to dissolve surface oxides, degreasing, etc.), grinding or polishing, etc.

Electrodepositing the CoP alloy generally electroplating the body 20 generally includes providing a source of Co and P, e.g. via plating bath comprising electrolytes composed of Co and P ions, e.g. in the form of salts. Examples include sulphates of cobalt, phosphorous acids, etc. Additional acids, salts, and electrolytes may also be utilized to facilitate the electroplating, as will be understood by those of skill in the art.

The CoP alloy generally includes from about 8 to about 12 % phosphorus (P) by weight (wt.%). The P content may be varied through the alloy, such that these values represent an average P content in the alloy as a whole. The balance of the CoP alloy is typically cobalt (Co). In some embodiments, the CoP alloy consists essentially of Co and P according to the proportions above. When the wear-resistant coating 16 is prepared from multiple independent depositions, the particular composition of the CoP alloy may vary between layers. In some embodiments, each layer of CoP alloy deposited independently consists essentially of Co and P according to the proportions above. In other embodiments, the layers may be intentionally varied, e.g. with respect to P content, as will be understood by those of skill in the art.

During the electroplating, the cobalt source may be provided as a liquid additive, a powder additive, and/or a dissolvable to provide the source of Co ions during the plating process. Typically, the Co ions are provided as a water-soluble additives, such as Co sulfate (CoSO₄.7*H₂0). P ions can likewise be provided utilizing suitable chemical species and, in an embodiment, may be supplied by breakdown of phosphorous acid (H₃PO₃) added to the plating bath solution. The plating bath chemistry may also be formulated to include other ingredients or constituents including pH balancing agents and/or chelating agents, such as organic acids. Other bath formulations are also possible, with fine tuning of other parameters (e.g., temperatures and agitation intensities) performed as appropriate for a particular plating bath operation.

In some embodiments, the wear-resistant coating comprises one or more performance additives. For example, in certain embodiments, the coating comprises an anti-wear additive (i.e., an anti-wear component). Examples of suitable anti-wear additives include wear-resistant particles, such as those composed of ceramics, etc. Specific examples of anti-wear additives include particles of boron carbide (B4C), tungsten carbide (WC), titanium nitride (TiN), aluminum oxide (Al₂O₃), and combinations thereof. In specific embodiments, the wear additive is selected from B4C particles and/or WC particles.

The anti-wear additive(s) are typically included in a total amount of from about 10 to about 55 volume percent, such as from about 15 to about 45, alternatively from about 20 to about 40, alternatively from about 20 to about 30, vol.% of the coating. As will be understood in view of the Examples, the loading amounts (i.e., vol.%) of the anti-wear additive(s) can be determined by cross-sectional analysis using scanning electron microscopy (SEM) in conjunction with energy-dispersive X-ray spectroscopy (EDX). More particularly, SEM-EDX can be used to provide an image for analysis, where the 2-dimensional (2D) area of particles shown in a cross-section is representative of the 3-dimensional (3D) volume of said particles in the coating. This method may be used quantitatively or qualitatively depending on the specific particles selected, e.g. where controlling the distribution of particle size, shape, etc. may provide for more precise correspondence of the 2D area to the 3D volume of the particles in the coating.

In particular embodiments, the wear-resistant coating comprises B4C particles. Typically, the B4C particles are present in an amount of from about 20 to about 40 vol.%, based on the total weight of the wear-resistant coating. It was surprisingly found that the B4C may be loaded to higher amounts than other anti-wear additives (e.g. WC) by maintaining the particles suspended during the application process, this increasing the loading capacity and achieving higher loading amounts of the anti-wear additive.

In some embodiments, the wear-resistant coating further comprises a lubricant compound. Examples include hexagonal boron nitride (hBN), molybdenum disulfide (MoS₂), tungsten disulfide (WS₂), graphene, zirconia, and combinations thereof. Such lubricant compounds may be used together or independently from the anti-wear additive. Typically, the loading amount for the total additives used corresponds to those described above with respect to the anti-wear additive.

In some embodiments, the B4C particles are included as described above as both an anti-wear and also a lubricating additive.

It is to be appreciated that the additives present in the coating can comprise different densities from one another, such that the weight percent (wt.%) of any one or more of the additives in the coating may vary. For example, B4C has a density of about 2.5 g/cc, whereas WC has a density of about 15.63 g/cc, such that an equivalent particle loading in terms of vol.% is not the same in terms of wt.%. A specific wt.% loading based on a particular particle may be utilized or determined, as will be understood by those of skill in the art.

The CoP alloy is typically deposited to a minimum thickness of 100 µm. When machining is to be performed on the CoP alloy, a minimum thickness of at least about 150 µm may be utilized to account for loss of material. However, the wear-resistant coating 16 will perform at a final thickness of about 40 to about 60 µm, such that the 100 µm minimum deposition thickness may be employed in typical cases. In general, a deposition thickness of 100 to 300 µm, such as from 150 to 200 µm, is utilized. Thicknesses above these ranges, such as from about 350 to about 500 µm have been successfully utilized as well. However, additional attention is needed concerning the heat treatment step to prevent cracking on cooling when thickness of around 500 µm or more are achieved. As such, typical embodiments utilize a range of from about 100 µm to about 500 µm of total thickness for the CoP alloy, inclusive of all deposited layers. In some embodiments, the total thickness for the CoP alloy is maintained between about 150 µm and about 350 µm, alternatively from about 150 µm and about 300 µm, alternatively from about 150 µm and about 250 µm on deposition.

As introduced above, it is to be appreciated that the electrodeposition method does not rely on conventional techniques of High Velocity Oxygen Fuel (HVOF), High Velocity Air Fuel (HVAF), an/or Kinetic Metallization (KM). More specifically, the method is typically free from (i.e., carried out in the absence of) such techniques.

Once the CoP alloy is deposited, the coated disc body may be machined. In general, the precipitation-hardened CoP alloy of the wear-resistant layer exhibits a Vickers harness of at least twice that of the as-deposited cobalt-phosphorus (CoP) alloy before the heat treating. As such, the machining step prior to heat treatment provides many advantages in terms of ease of operation and maintaining the integrity of the coating layer and underlying component body.

Generally, conventional tooling and processes can be utilized to machine the as-deposited CoP alloy, i.e., in the pre-hardened or soft state. Typically, the CoP alloy comprises a relatively hardness value on the order of, for example, 400 to 600, such as from 500 to 600 HV. Machining operations may be performed to define detailed structural features in the body 20 as desired. For example, in some embodiments, mechanical drilling, laser drilling, water jetting, electro discharge machining, or the like may be performed to form channels, slots, grooves, or holes, such as those shown at 14 in FIG. 1.

Additionally or alternatively, grinding or polishing may be performed to impart the coating surface with a highly smooth surface finish, such as a surface finish having an average roughness less than .4 microns (approximately 15 µin) RA. Such process steps may be repeated, as appropriate, until a desired alloy body thickness is achieved.

Once processing is complete of the coated disc body, heat treating performed to precipitate harden the CoP alloy and give the wear-resistant coating. In some embodiments, the body 20 is desirably annealed (e.g. as may be the case composed of a cold-worked metal or alloy, such as steel), a single heat treatment process can be carried-out to precipitate harden the CoP alloy, while concurrently annealing the disc body. Typically, however, the heat treating is solely to precipitate harden the CoP alloy to form the wear-resistant coating.

The particular parameters of the heating schedule will vary depending upon the composition of the CoP alloy itself. Typically, heat treatment is performed at a peak temperature between 250 and 450 °C for a time of from 2 to 24 hours. After heat treatment and precipitation hardening, the wear-resistant coating typically exhibits a Vickers hardness of from at least about 900 to about 1050 HV.

The particular configuration of the brake disc may be selected in view of a desired end use. For example, the particular particle(s) utilized and/or the particular loading amount may be selected in view of the intended use of the brake disc, and likewise the coating thickness and other parameters may be chosen. For example, in high-wear applications such as in heavy commercial vehicles, the brake disc may be configured with a thicker coating and/or higher loading of anti-wear particles. In some embodiments, the wear-resistant coating is adapted for coating to a thickness of at least 150 µm, comprises from about 20 to about 40 vol.% of B4C anti-wear particles, and passes ASTM G65-16(2021) testing through 3000 revolutions, alternatively through 6000 revolutions.

Additional parameters and characteristics of the wear-resistant coating 16 and coated brake disc of the exemplary embodiments will be further understood in view of the examples below.

### EXAMPLES

### General Coating Procedure:

Substrates are electroplated using a bath of cobalt sulphate, phosphorus acid, boric acid, and optionally anti-wear and/or lubricant additive (e.g. B4C) to give a 200 µm (target; actual 180-190 µm) CoP alloy layer having a phosphorous content of from 8-12 wt.% based on the total weight of the CoP alloy.

Hardness is measure via a micro hardness indenter. The CoP alloy layer achieves a hardness of 400-600 HV. The coated substrates are then heat treated (250-450 °C; 2 to 24 hours) to attain a hardness of 900 to about 1050 HV.

Cross-sectional analysis is performed using scanning electron microscopy (SEM) with a back scatter detector, in conjunction with energy-dispersive X-ray spectroscopy (EDX) to assess and monitor for compositional changes during the performance examples below. When utilized, the B4C particles in the coating matrix are also assessed and monitored via SEM-EX, with B4C particle content estimated by calculating the 2D area% of B4C particles (showing as dark flakes among a light CoP matrix) representing the approx. volume % of B4C in the CoP matrix.

### High-Temperature Cycling Performance

A high-temperature cyclic assessment is performed to simulate repeated braking, e.g. downhill and/or under load. Extreme temperature (500 °C) and a large number of sequential cycles are selected to demonstrate performance under extreme conditions.

Sample coupons (4140 carbon steel) are electroplated according to the general procedure above to a coating thickness of 180-190 µm. Small coupons are used to facilitate rapid heating/cooling during repeated cycling.

SEM-EDX analysis (FIG. 3, a= 500x, b = 5000x) shows a uniform coating structure, with a B4C particle (dark flakes) content of 40-45%.

The sample is equipped with a thermocouple inserted to monitor the actual sample (coating) temperature during cycling to ensure material achieves the target temperature for the target duration.

A box furnace (air) is prepared for long temperature holds. A quarts tube furnace (air) is prepared for short temperature holds. Furnace hot zones are set to 200 °C above the setpoint temperature (e.g. 700 °C) to achieve high heating rate and to ensure the setpoint (500 °C) is reached. Cooling is performed under ambient conditions to reach room temperature (RT) before beginning the next cycle.

In each instance, a sample is inserted into the hot zone until the actual sample temperature (thermocouple) reaches the set point. The sample is then held for 10 seconds, removed from the furnace, and allowed to cool to RT to completing one cycle. The minimum temp. achieved at the start of each hold is 500 °C; with a maximum temperature of 540-560 °C. The samples exhibit Newtonian cooling, with a rapid temperature drop for the first few hundred degrees and required cooling times of 15-20 min to reach a touch-safe temperature (30-50 °C based on thermocouple) for each sample.

Each sample is subjected to 50 cycles at the 500 °C setpoint. After each 10 cycles, hardness is determined an SEM-EDX analysis performed to monitor for physical changes.

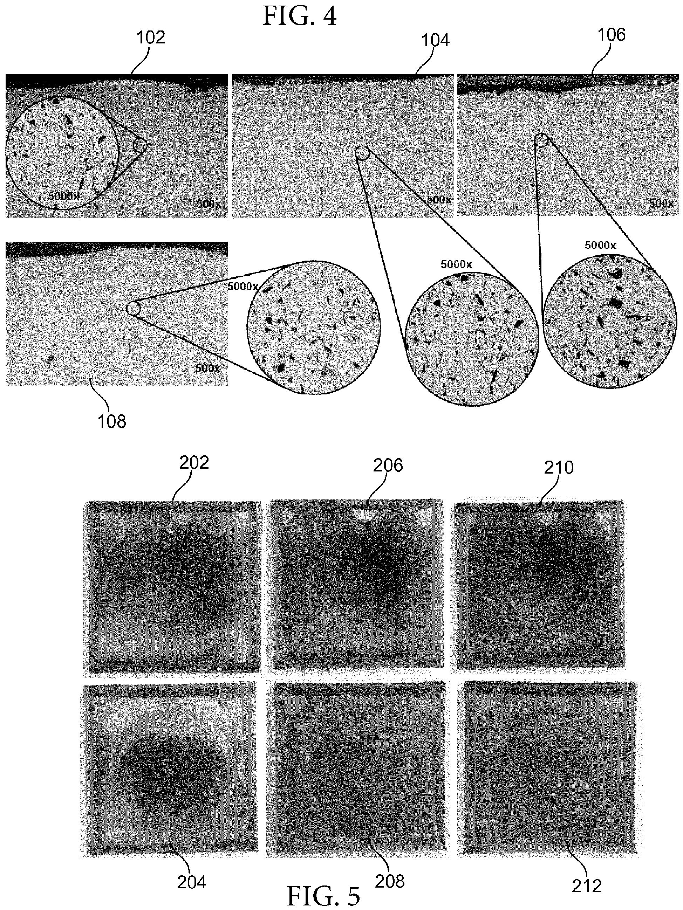

The results of the hardness testing, with each value reported as an average over 5 measurements, is shown in Table 1 below. Images from the SEM-EDX analysis are shown in FIG. 4.

**Table 1. Hardness (HV) Measurement Results During High Temperature Cycling**

| Total Cycles (500 °C) | Hardness (HV) | Reference (FIG. 4) |
|---|---|---|
| 10 | 958 | 102 |
| 20 | 953 | 104 |
| 30 | 925 | 106 |
| 50 | 1024 | 108 |

The wear-resistant coating is unchanged after the high temperature cycling events. As shown, no physical changes post cyclic exposure to the elevated temperatures are observed. No significant change in the hardness is observed. No change to the microstructure of the coating is visible via SEM-EDX. The wear-resistant coating exhibits excellent temperature stability.

### Corrosion Resistance

A long-term constant-exposure corrosion assessment is performed to assess corrosion resistance. A salt immersion test is prepared to simulate environmental conditions. Specifically, conditions are selected to simulate longer hours in salt fog to provide corrosion resistance performance results under extreme environmental conditions.

Sample panels (4140 carbon steel) are electroplated on one face, and the other faces/sides masked with yellow Kapton tape secured with epoxy. The samples are placed face down on circular stilts to cure. In some instances, epoxy drip down the stilt is visible on the panel face as a circular imprint of epoxy.

A salt water bath is prepared to a concentration of 75 g/L with NaCl, and pH adjusted with HCl to a pH of 2.5. Air is bubbled through the salt water during the test.

Corrosion testing is performed via immersion in the salt water bath. The assessment is performed in duplicate at RT and at 50 °C. The elevated temperature is selected to provide an aggressive corrosion environment with faster kinetics over the RT assessment. Under the conditions selected, a 7-day immersion equates to 1000 hours in salt fog. The samples were immersed for a total of 14 days (2000 hour salt fog equivalent).

The results of the corrosion testing is shown in Table 2 below. A "pass" is recorded where no rust is evident from visual inspection. A "fail" is recorded where rust is observed upon inspection. Images of the panels before immersion, after 7 days in the salt bath, and after 14 days in the salt baths, are shown in FIG. 5.

**Table 2. Corrosion Testing Results**

| Immersion Time (hours) | Bath Temperature | | FIG. 5Ref. (RT / 50 °C) |
|---|---|---|---|
| | RT | 50 °C | |
| 0 | Pass | Pass | 202 / 204 |
| 24 | Pass | Pass | N/A |
| 48 | Pass | Pass | N/A |
| 72 | Pass | Pass | N/A |
| 96 | Pass | Pass | N/A |
| 168 (1k salt fog eq.) | Pass | Pass | 206 / 208 |
| 216 | Pass | Pass | N/A |
| 240 | Pass | Pass | N/A |
| 264 | Pass | Pass | N/A |
| 336 (2k salt fog eq.) | Pass | Pass | 210 / 212 |

The wear-resistant coating is unchanged after the long-term high corrosive environment exposure. As shown, no rust, pitting, or flaking is observed, even on the sample immersed at the elevated temperature.

### Ring Shear Adhesion Test: Bond Strength

A cylindrical rod is prepared via the process under evaluation, plating to a thickness of about 1.5 mm. The rod is machined in a manner that removes all of the plated deposit except for small rings of plating of predetermined width (~1.5 mm wide, spaced ~2.5 cm apart). The rod is then cut between the plated rings. These sections of the rod with the plated rings are tested by forcing the rod through a hardened steel die having a hole with a diameter greater than that of the rod but less than that of the rod and the coating. The bond strength is calculated using the load required cause failure and the area of the coating, as described in J. W. Dini et al. "Techniques for Quantitatively Measuring Adhesion of Coatings", Metal Finishing, 75.42 (March 1977) and 75,48 (April 1977).

### Comparative Analysis: Coefficient of Friction (COF), GCI compatibility, and Bond Strength

The coefficient of friction (COE), coefficient of thermal expansion (CTE), and bond strength (Ring Shear Adhesion) is assessed for the wear-resistant coating of the present embodiments (CoP-WRC) against comparative hard chrome (electroplate) and WC HVOF (86/10/4) coatings. The results of the assessment are set forth in Table 3 below.

**Table 3. COE, COF, CTE, and Bond Strength Results**

| Material | COF | CTE (ppm/°C) | CTE Mismatch vs. GCI (ppm/°C) | Bond Strength (KSI) |
|---|---|---|---|---|
| CoP-WRC | 0.32 | 12.1 | -0.1 | >60 |
| Chromium | 0.41 | 5.9 | 6.1 | ~35 |
| HVOF 86/10/4 | 0.5 - 0.8 | 6.5 | 5.5 | ~12 |
| Gray Cast Iron (GCI) | 0.32 | 12.0 | - | - |

The wear-resistant coating exhibits a lower COF than either comparative chrome or HVOF coatings, with a COF comparable to GCI. It is believed that introduction of the lubricant additives into the electroplating slurry will further decrease the COE of the wear-resistant coating, providing an improvement over GCI.

The wear-resistant coating has high compatibility with GCI in terms of low CTE mismatch. Brake components see extreme thermal shock during normal operation. As a higher CTE mismatch increases the probability of spalling/delamination, it is believed the wear-resistant coating provides unique benefits over comparative coatings when applied to GCI brake discs.

The wear-resistant coating has a notably high bond strength compared to either comparative chrome or HVOF coatings, providing for superior adhesion and coating stability under which brake discs are subjected to during routine operation.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It is to be understood that various changes may be made in the function and arrangement of elements described in an exemplary embodiments above, without departing from the scope as set forth in the appended claims. Moreover, all combinations of the aforementioned components, compositions, method steps, formulation steps, etc. are hereby expressly contemplated for use herein in various non-limiting embodiments even if such combinations are not expressly described in the same or similar paragraphs.

With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Further, any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the ranges and subranges enumerated herein sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. An individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims. Lastly, it will be understood that the term "about" with regard to any of the particular numbers and ranges described herein is used to designate values within standard error, equivalent function, efficacy, final loading, etc., as understood by those of skill in the art with relevant conventional techniques and processes for formulation and/or utilizing compounds and compositions such as those described herein. As such, the term "about" may designate a value within 10, alternatively within 5, alternatively within 1, alternatively within 0.5, alternatively within 0.1, % of the enumerated value or range.

While the present disclosure has been described with respect to particular embodiments thereof, it is apparent that numerous other forms and modifications will be obvious to those skilled in the art. The appended claims and this disclosure generally should be construed to cover all such obvious forms and modifications, which are within the true scope of the present disclosure.

## Claims

1. A brake disc, comprising:
a disc body having at least one braking surface; and
a corrosion and wear-resistant coating electrodeposited on the at least one braking surface,
wherein the corrosion and wear-resistant coating comprises a precipitation-hardened cobalt-phosphorus (CoP) alloy and exhibits a Vickers hardness of from 900 to 1050 HV.

2. The brake disc of claim 1, wherein the disc body comprises a base material selected from: (i) gray cast iron; (ii) an aluminum alloy; (iii) a titanium alloy; and (iv) any combination of (i)-(iii).

3. The brake disc of claim 1, wherein the CoP alloy of the corrosion and wear-resistant coating comprises a phosphorous content of from 8 to 12 wt.%, based on the total weight of the CoP alloy.

4. The brake disc of claim 1, wherein the corrosion and wear-resistant coating further comprises wear-resistant particles that are present in the wear-resistant coating in an amount of from 10 to 55 vol.%.

5. The brake disc of claim 4, wherein the wear-resistant particles are selected from: (i) boron carbide (B₄C); (ii) tungsten carbide (WC); (iii) titanium nitride (TiN); (iv) aluminum oxide (Al₂O₃); or (v) any combination of (i)-(iv).

6. The brake disc of claim 1, wherein the disc body comprises gray cast iron and the corrosion and wear-resistant coating further comprises 20 to 40 vol.% of wear-resistant boron carbide (B4C) particles.

7. The brake disc of claim 1, wherein the corrosion and wear-resistant coating further comprises a lubricant compound selected from (i) hexagonal boron nitride (hBN); (ii) molybdenum disulfide (MoS₂); (iii) tungsten disulfide (WS₂); (iv) graphene; (v) zirconia; and (vi) any combination of (i)-(v).

8. The brake disc of any one of claims 1-7, wherein the corrosion and wear-resistant coating: (i) has an average thickness of from 100 to 500 µm; (ii) maintains a Vickers hardness of at least 90% of an initial Vickers hardness though at least 50 cycles of being heating to and held at least 500 °C for a time of at least 5 seconds per cycle; (iii) exhibits substantially no corrosion through at least 14 days of immersion in salt water at a temperature of at least 50 °C; (iv) exhibits a bond strength to the braking surface of the body of at least 60 Ksi; (v) exhibits a coefficient of friction of less than 0.35; or (vi) any combination of (i)-(v).

9. A method of preparing a brake disc, the method comprising:
providing a disc body having at least one braking surface;
electrodepositing a layer of a cobalt-phosphorus (CoP) alloy onto the at least one braking surface to a thickness of at least 150 µm to give a coated disc body; and
heat treating the coated disc body to precipitation harden the CoP alloy and give a corrosion and wear-resistant coating that exhibits a Vickers hardness of from 900 to 1050 HV.

10. The method of claim 9, wherein the electrodepositing is performed without any High Velocity Oxygen Fuel (HVOF), High Velocity Air Fuel (HVAF), or Kinetic Metallization (KM) techniques; and wherein the precipitation-hardened CoP alloy of the corrosion and wear-resistant coating exhibits a Vickers harness of at least twice the Vickers hardness of the as-deposited cobalt-phosphorus (CoP) alloy before the heat treating.

11. The method of claim 9, wherein the as-deposited cobalt-phosphorus (CoP) alloy of the coated disc body comprises a hardness of from 400 to 600 HV, and wherein the method further comprises machining the layer of the as-deposited cobalt-phosphorus (CoP) alloy before the heat treating.

12. The method of claim 11, wherein machining the layer of the as-deposited cobalt-phosphorus (CoP) alloy comprises grinding or polishing a surface of the as-deposited cobalt-phosphorus (CoP) alloy opposite and parallel to the braking surface to give a surface finish having an average roughness of less than 0.4 microns.

13. The method of claim 11, wherein: (i) the disc body comprises through holes, slots, and/or grooves in the at least one braking surface; (ii) wherein machining the layer of the as-deposited cobalt-phosphorus (CoP) alloy comprises forming channels, slots, grooves, and/or holes in the layer of cobalt-phosphorus (CoP) alloy of the coated disc body.

14. The method of claim 9, wherein: (i) the disc body comprises a base material selected from gray cast iron, an aluminum alloy, a titanium alloy, and combinations thereof; (ii) the cobalt-phosphorus (CoP) alloy deposited onto the at least one braking surface comprises a phosphorous content of from 8 to 12 wt.%, based on the total weight of the CoP alloy; (iii) the corrosion and wear-resistant coating further comprises from 10 to 55 vol.% of wear-resistant particles selected from boron carbide (B₄C), tungsten carbide (WC), titanium nitride (TiN), aluminum oxide (Al₂O₃), and combinations thereof; (iv) the corrosion and wear-resistant coating further comprises a lubricant compound selected from hexagonal boron nitride (hBN), molybdenum disulfide (MoS2), tungsten disulfide (WS₂), graphene, zirconia, and combination thereof; or (v) any combination of (i)-(iv).

15. The method of claim 9, wherein the corrosion and wear-resistant coating: (i) has an average thickness of from 100 to 500 µm; (ii) maintains a Vickers hardness of at least 90% of an initial Vickers hardness though at least 50 cycles of being heating to and held at least 500 °C for a time of at least 5 seconds per cycle; (iii) exhibits substantially no corrosion through at least 14 days of immersion in salt water at a temperature of at least 50 °C; (iv) exhibits a bond strength to the braking surface of the body of at least 60 Ksi; (v) exhibits a coefficient of friction of less than 0.35; or (vi) any combination of (i)-(v).
